# EUROPÄISCHE PATENTSCHRIFT

(11) **EP 1 378 704 B1**
(45) Veröffentlichungstag und Bekanntmachung des Hinweises auf die Patenterteilung: **11.07.2007**
(21) Anmeldenummer: 02450152.0
(22) Anmeldetag: 05.07.2002
(51) Int. Cl.: F16L 47/02

(54) **Formstück aus Kunststoff zum Verbinden wenigstens zweier Wasserleitungen**
Plastic fitting for connecting at least two pipes
Pièce en matière plastique pour coupler aux moins deux tuyaux

(43) Veröffentlichungstag der Anmeldung: 07.01.2004
(73) Patentinhaber: KE-KELIT Kunststoffwerk Gesellschaft m.b.H., A-4017 Linz (AT)
(72) Erfinder: Rametsteiner, Karl, 4040 Linz (AT); Egger, Karl, 4203 Altenberg (AT)
(74) Vertreter: Hübscher, Helmut

(56) Entgegenhaltungen:
- FR-A- 2 611 021
- US-A- 2 498 831
- US-A- 3 944 261

## Beschreibung

Die Erfindung bezieht sich auf einen Grundkörper mit Formstück aus Kunststoff zum Verbinden wenigstens zweier Wasserleitungen mit zumindest einem von einem Anschlußflansch ausgehenden, vorzugsweise profilierten Nippel zum Aufstecken des Anschlußendes einer Wasserleitung, wobei der Nippel mit dem Anschlußflansch einen vom Grundkörper des Formstückes gesondert gefertigten Formkörper aus Kunststoff mit einem Ansatzstutzen bildet, der in eine Aufnahme des Grundkörpers mit einer Preßpassung einsetzbar ist.

Um rohr- oder schlauchartige Wasserleitungen an ein Formstück beispielsweise in Knie- oder T-Form dauerhaft anschließen zu können, ist es bekannt, das Formstück mit einem profilierten Nippel zum Aufstecken des Anschlußendes der schlauchartigen Wasserleitung zu versehen, wobei das Anschlußende der Wasserleitung mit Hilfe einer metallischen Klemmhülse auf dem Nippel festgeklemmt wird. Das Anschlußende wird dabei durch die Klemmhülse in die üblicherweise ringförmige Profilierung des Nippels eingedrückt, so daß sich neben dem Reibungsschluß auch ein Formschluß ergibt, der ein axiales Abziehen des Anschlußendes der Wasserleitung vom Nippel verhindert. Die Klemmhülse selbst wird an einem Anschlußflansch des Nippels zugfest verankert, indem sie mit einem umgebördelten Rand einen Ringwulst des Flansches hintergreift. Da mit unterschiedlichen Querschnittsabmessungen der Leitungsschläuche für Wasserleitungen gerechnet werden muß, sind unterschiedliche Nippelausbildungen erforderlich, was bei Formstücken aus Messing lediglich eine Umstellung der für die Nippelausbildung eingesetzten Drehmaschinen bedingt. Schwieriger werden die Herstellungsbedingungen für Formstücke aus Kunststoff, weil jeweils gesonderte Formwerkzeuge benötigt werden.

Zum Verbinden eines Formstückes mit einer rohr- oder schlauchartigen Wasserleitung ist es darüber hinaus bekannt (CH 682008 A5) die Enden der Wasserleitungen unmittelbar in das Formstück einzustecken und mit dem Formstück zu verschweißen oder zu verkleben. Abgesehen davon, daß solche Formstücke keine profilierten Nippel zum Aufstecken des Anschlußendes der Wasserleitung aufweisen, müssen diese bekannten Formstücke jeweils an den Außendurchmesser des Anschlußendes der Wasserrohrleitungen angepaßt werden, was ähnliche Anpassungsschwierigkeiten mit sich bringt. Gleiches gilt, wenn zwei zu verbindende Wasserleitungen auf ein Verbindungsrohr aufgesteckt und mit dem Verbindungsrohr verschweißt werden (US 3 961 814 A) oder zwischen einem eine Wasserleitung aufnehmenden Formstück und dem Anschlußende der Wasserleitung eine Kunststoffbuchse mit einem Flansch eingesetzt wird, über den die Muffe gedreht werden kann, um über die dabei entstehende Reibungswärme ein Verschweißen einerseits der Buchse mit dem Formkörper und anderseits des Anschlußendes der Wasserleitung mit der Buchse zu erreichen (US 4 784 409 A).

Schließlich ist es bekannt (US 3 944 261 A), die für den Anschluß einer Wasserleitung notwendigen Nippel gesondert von einem Grundkörper des Formstückes zum Verbinden wenigstens zweier Wasserleitungen herzustellen und mit dem Grundkörper des Formstückes zu verbinden. Zu diesem Zweck weisen die Nippel einen Anschlußflansch mit einem vom Anschlußflansch abstehenden, zylindrischen Ansatzstutzen auf, der in eine zylindrische Aufnahme des Grundkörpers mit einer Preßpassung eingesetzt wird. Da dieser Preßsitz keine ausreichende Verbindung zwischen dem Grundkörper und dem Nippel darstellt, wird der Anschlußflansch des Nippels zusätzlich mit dem Grundkörper verschweißt oder verklebt. Trotz dieser Maßnahmen kann keine einer einstückigen Ausformung des Grundkörpers und des Nippels gleichwertige Verbindung zwischen dem Nippel und dem Grundkörper hergestellt werden.

Der Erfindung liegt somit die Aufgabe zugrunde, ein Formstück aus Kunststoff zum Verbinden wenigstens zweier Wasserleitungen der eingangs geschilderten Art so auszugestalten, daß der Herstellungsaufwand trotz einer Bereitstellung verschiedenartiger Nippel nicht nur einfach gehalten, sondern auch eine einer einstückigen Ausformung des Formstückes gleichwertige Verbindung zwischen dem Nippel und dem Grundkörper der Formstückes erreicht werden kann.

Die Erfindung löst die gestellte Aufgabe dadurch, daß der Ansatzstutzen in die Aufnahme des Grundkörpers unter einer Preßschweißung zwischen dem zylindrischen Ansatzstutzen und der zylindrischen Aufnahme eingesetzt ist und der Anschlußflansch des Nippels auf der dem Grundkörper zugekehrten Seite im Übergangsbereich zum Ansatzstutzen eine umlaufende Hohlkehle aufweist.

Um den Vorteil einer vom Grundkörper der Formstücke gesonderten Fertigung der Nippel nützen zu können, nämlich eine Kombination des Grundkörpers mit unterschiedlichen Nippeln, muß für eine einer einstückigen Fertigung gleichwertige Verbindung zwischen dem jeweils ausgewählten Nippel und dem Grundkörper des Formstücks gesorgt werden. Eine solche Verbindung ergibt sich, wenn aufgrund einer Preßpassung zwischen dem zylindrischen Ansatzstutzen des Nippels und der zylindrischen Aufnahme des Grundkörpers der Ansatzstutzen mit dem Grundkörper innerhalb der zylindrischen Aufnahme dauerhaft verschweißt wird. Zu diesem Zweck brauchen der Grundkörper im Bereich der Aufnahme und der Ansatzstutzen des Nippels lediglich auf eine entsprechende Schweißtemperatur erwärmt und ineinandergepreßt zu werden, so daß sich durch die dabei ergebende Preßschweißung eine innige Verbindung zwischen dem Grundkörper und dem Ansatzstutzen des Nippels einstellt. Wegen der Zuordnung des Anschlußflansches zum Nippel bleiben die für die Klemmverbindung zwischen Nippel und Leitungsschlauch maßgebenden geometrischen Verhältnisse vom Grundkörper unabhängig. Darüber hinaus kann der dem Nippel zugehörige Anschlußflansch vorteilhaft als Anschlag für die Eingriffslänge des Ansatzstutzens in die Aufnahme des Grundkörpers sowie als Widerlager für den Pressenangriff beim Einpressen des Ansatzstutzens in die Aufnahme des Grundkörpers dienen.

Ähnlich der axialen Klebeschichtverdrängung wird beim Preßschweißen einerseits auf der Innenwand der Aufnahme des Grundkörpers und anderseits auf der Außenwand des Ansatzstutzens eine Oberflächenschicht verdrängt, die sich im Stirnbereich der Aufnahme bzw. des Ansatzstutzens zu einem Ringwulst anstaut. Um trotz eines solchen schweißbedingten Ringwulstes oder eines sich aus einer verdrängten Klebeschicht ergebenden Ringwulstes einen satten Anschlag des Anschlußflansches des Nippels am Grundkörper des Formstückes sicherzustellen, weist der Anschlußflansch auf der dem Grundkörper zugekehrten Seite im Übergangsbereich zum Ansatzstutzen eine umlaufende Hohlkehle auf, die diesen Ringwulst aufnimmt.

Um einheitliche Anschlußbedingungen für unterschiedliche Nippel an einem Formstück zu ermöglichen, kann der Grundkörper Aufnahmen mit übereinstimmendem Nenndurchmesser für alle einzusetzenden Nippel aufweisen, deren Nenndurchmesser jedoch gegebenenfalls unterschiedlich sind.

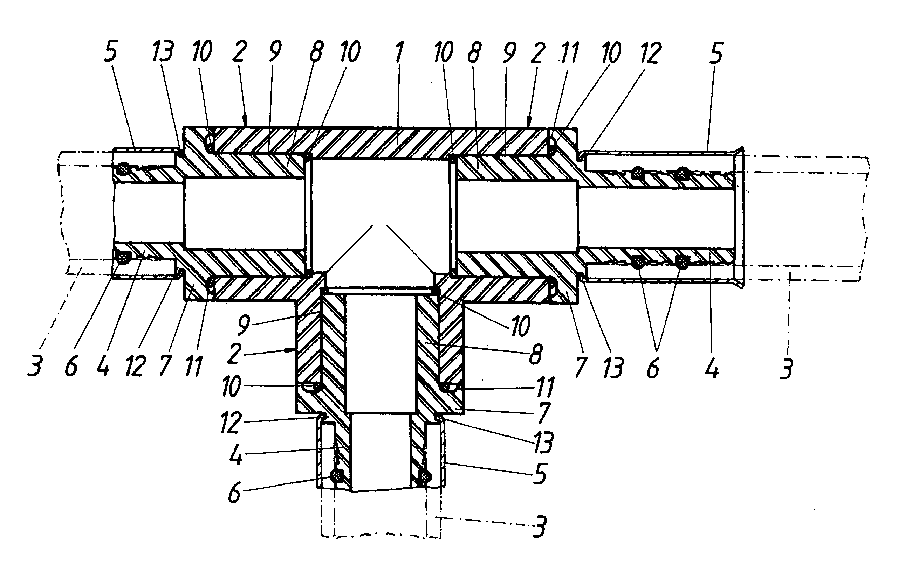

In der Zeichnung ist der Erfindungsgegenstand beispielsweise dargestellt, und zwar wird ein erfindungsgemäßes Formstück zum Verbinden von Wasserleitungen in einem vereinfachten Axialschnitt gezeigt.

Gemäß dem dargestellten Ausführungsbeispiel bildet der Grundkörper 1 des Formstückes ein T-Stück mit drei Anschlüssen 2 für je eine schlauchartige Wasserleitung 3, die auf einen profilierten Nippel 4 aufsteckbar ist und mit einer metallischen Klemmhülse 5 unter Zwischenschaltung von Ringdichtungen 6 festgeklemmt werden kann. Im Gegensatz zu herkömmlichen Formstücken aus Kunststoff sind die Nippel 4 nicht einstückig mit dem Grundkörper 1 geformt, sondern bilden gesonderte Formstücke, die jeweils den eigentlichen Nippel 4, einen Anschlußflansch 7 und einen zylindrischen Ansatzstutzen 8 zu einer Baueinheit zusammenfassen, die in eine zylindrische Aufnahme 9 des Grundkörpers 1 eingesetzt ist. Zwischen den Ansatzstutzen 8 und den Aufnahmen 9 des Grundkörpers 1 ist eine Preßpassung vorgesehen, die nach einer Erwärmung der Aufnahmen 9 und der Ansatzstutzen 8 auf eine entsprechende Schweißtemperatur eine Preßschweißung erlaubt, wenn die Ansatzstutzen 8 in die Aufnahmen 9 eingepreßt werden. Bei diesem Preßschweißen wird entlang der Innenwandung der Aufnahmen 9 und der Außenwandung der Ansatzstutzen 8 eine Materialschicht verdrängt, die im Stirnbereich der Aufnahmen 9 und des Ansatzstutzens 8 zu Ringwülsten 10 führt. Um trotz der Ringwülste 10 auf der Stirnseite der Aufnahmen 9 einen satten Anschlag des Anschlußflansches 7 an den Stirnseiten der Anschlüsse 2 sicherzustellen, sind die Anschlußflansche 7 auf der den Anschlüssen 2 zugekehrten Seite mit entsprechenden Hohlkehlen 11 versehen.

Da die Nenndurchmesser der Ansatzstutzen 8 bzw. der Aufnahmen 9 übereinstimmen, können mit einer Art von Grundkörper 1 Nippel 4 unterschiedlicher Abmessungen kombiniert werden, ohne hiefür jeweils gesonderte Formwerkzeuge vorsehen zu müssen. Trotz des Einsatzes von vom Grundkörper 1 getrennt gefertigten Nippeln 4 ergeben sich in ihrer Funktion und in ihrem Aussehen mit einstückig gefertigten Formstücken aufgrund der Preßschweißung zwischen Grundkörper 1 und den Ansatzstutzen 8 durchaus vergleichbare Formstücke, allerdings mit einem erheblich geringeren Werkzeugeinsatz. Die Anschlußbedingungen zwischen den Nippeln 4 und den schlauchartigen Wasserleitungen 3 bleiben von der Verbindung des Ansatzstutzens 8 mit dem Grundkörper 1 unberührt, weil der Anschlußflansch 7 nicht dem Grundkörper 1, sondern dem Formkörper des Nippels 4 zugehört. Die Klemmhülse 5 kann daher in üblicher Weise über einen Ringwulst 12 zugfest an den Anschlußflansch 7 über einen umgebördelten Rand 13 angeschlossen werden, weil ja der Ringwulst 12 mit dem Nippel 4 an die jeweils aufzunehmende Schlauchgröße angepaßt ist.

Die Erfindung ist selbstverständlich nicht auf das dargestellte Ausführungsbeispiel beschränkt. So könnte der Grundkörper 1 unterschiedliche geometrische Formen annehmen und beispielsweise ein Verbindungsknie zwischen zwei Rohrleitungen 3 bilden. Dabei ist es keineswegs erforderlich, alle Anschlüsse 2 mit Nippeln 4 zu versehen.

## Patentansprüche

1. Grundkörper mit Formstück aus Kunststoff zum Verbinden wenigstens zweier Wasserleitungen mit zumindest einem von einem Anschlußflansch (7) ausgehenden, vorzugsweise profilierten Nippel (4) zum Aufstecken des Anschlußendes einer Wasserleitung, wobei der Nippel (4) mit dem Anschlußflansch (7) einen vom Grundkörper (1) des Formstückes gesondert gefertigten Formkörper aus Kunststoff mit einem Ansatzstutzen (8) bildet, der in eine Aufnahme (9) des Grundkörpers (1) mit einer Preßpassung einsetzbar ist, **dadurch gekennzeichnet, daß** der Ansatzstutzen (8) in die Aufnahme (9) des Grundkörpers (1) unter einer Preßschweißung zwischen dem zylindrischen Ansatzstutzen (8) und der zylindrischen Aufnahme (9) eingesetzt ist und der Anschlußflansch (7) des Nippels (4) auf der dem Grundkörper (1) zugekehrten Seite im Übergangsbereich zum Ansatzstutzen (8) eine umlaufende Hohlkehle (11) aufweist.

2. Formstück nach Anspruch 1, **dadurch gekennzeichnet, daß** der Grundkörper (1) Aufnahmen (9) mit übereinstimmendem Nenndurchmesser für alle einzusetzenden Nippel (4) aufweist, deren Nenndurchmesser gegebenenfalls unterschiedlich sind.

## Claims

1. Base body with a plastic fitting for connecting at least two water pipes, having at least one, preferably profiled, nipple protruding from a connecting flange (7) to take the connection end of a water pipe, wherein the nipple (4) forms, with the connecting flange (7), a moulded plastic body produced separately from the base body (1) of the fitting with a connection (8) which is adapted to be inserted into a receiving element (9) of the base body (1) with a press fit, **characterised in that** the connection (8) is inserted into the receiving element (9) of the base body (1) by pressure welding between the cylindrical connection (8) and the cylindrical receiving element (9) and the connecting flange (7) of the nipple (4) comprises a surrounding channelling (11) on the side facing the base body (1) in the crossover area with the connection (8).

2. Fitting according to claim 1, **characterised in that** the base body (1) comprises receiving elements (9) with corresponding nominal diameter for all nipples (4) to be inserted, of which the nominal diameters may be different.

## Revendications

1. Corps de base avec une pièce de forme en matière synthétique, pour relier au moins deux tuyauteries d'eau, avec au moins un embout (4) partant d'une bride de raccordement (7), de préférence profilée, pour enfichage de l'extrémité de raccordement d'une tuyauterie d'eau, l'embout (4) formant, avec la bride de raccordement (7), un corps de forme en matière synthétique, fabriqué séparément du corps de base (1) de la pièce de forme, avec une tubulure de rallonge (8) qui peut être insérée dans un logement (9) du corps de base (1) avec un ajustement serré, **caractérisé par le fait que** la tubulure de rallonge (8) est insérée dans le logement (9) du corps de base (1), avec un soudage avec pression entre la tubulure de rallonge (8) cylindrique et le logement (9) cylindrique, et la tubulure de raccordement (7) de l'embout (4) présente, sur la face tournée vers le corps de base (1), dans la zone de transition vers la tubulure de rallonge (8) une gorge creuse (11) de pourtour.

2. Pièce de forme selon la revendication 1, **caractérisée par le fait que** le corps de base (1) présente des logements (9), ayant un diamètre nominal coïncidant pour tous les embouts (4) à insérer, dont les diamètres nominaux sont, le cas échéant, différents.
